# EUROPEAN PATENT SPECIFICATION

(11) **EP 1 070 089 B1**
(45) Date of publication and mention of the grant of the patent: **19.03.2003**
(21) Application number: 99919214.9
(22) Date of filing: 08.04.1999
(51) Int. Cl.: C08F 10/06, C08F 232/00, C08F 4/64

(54) **LINEAR, ISOTACTIC POLYMERS, PROCESS FOR PREPARING SAME, AND USE THEREOF**
LINEARE, ISOTAKTISCHE POLYMERE, VERFAHREN ZU IHRER HERSTELLUNG UND IHRE VERWENDUNG
POLYMERES ISOTACTIQUES LINEAIRES, PROCEDE DE PREPARATION ET UTILISATION DE CEUX-CI

(30) Priority: 09.04.1998 DE 19816154
(43) Date of publication of application: 24.01.2001
(60) Divisional application: 02028219.0
(73) Proprietor: Rieger, Bernhard, Prof. Dr., 89275 Oberelchingen (DE)
(72) Inventor: Rieger, Bernhard, Prof. Dr., 89275 Oberelchingen (DE)
(74) Representative: Pfenning, Meinig & Partner
(86) International application number: PCT/EP99/02379
(87) International publication number: WO 99/052955

(56) References cited:
- EP-A- 0 747 406
- WO-A-96/20225
- WO-A-99/20664
- DE-A- 19 709 486
- DIETRICH, ULF ET AL: "Control of Stereoerror Formation with High-Activity "Dual-Side" Zirconocene Catalysts: A Novel Strategy To Design the Properties of Thermoplastic Elastic Polypropenes" J. AM. CHEM. SOC. (1999), 121(18), 4348-4355 , XP002110148
- RIEGER, BERNHARD ET AL: "Novel metallocene catalyzed polypropene homo- and brush-copolymers: control of new morphologies and beyond" POLYM. MATER. SCI. ENG. (1999), 80, 51-52 , XP002110149
- DIETRICH U ET AL: "NEW CLASS OF THERMOPLASTIC ELASTIC POLYPROPENES PREPARED WITH A HIGH ACTIVITY 'DUAL SIDE' ZIRCONOCENE CATALYST" RAPRA ABSTRACTS, vol. 36, no. 1, January 1999 (1999-01), page 138 XP000800737 ISSN: 0033-6750
- RIEGER B: "STEREOSPECIFIC PROPENE POLYMERIZATION WITH RAC- 1,2-BIS(N5 -(90FLUORENYL))-1-PHENYLETHANEZIRCONIUM DICHLORIDE/METHYLALUMOXANE" POLYMER BULLETIN, vol. 32, no. 1, 1 January 1994 (1994-01-01), pages 41-46, XP000420835 ISSN: 0170-0839

## Description

The present invention relates to linear, isotactic polymers, to a process for preparing same, and to the use thereof, isotacticity of the linear polymers, due to a statistic distribution of stereoscopic errors in the polymer chain, being within the range of from 25 to 60 % of [mmmm] pentad concentration.

For a long time, isotactic polymers have been of interest as plastic materials for manufacturing articles of relatively good deformation resistance, such as e.g. sheathings of household appliances. In general, such isotactic polymers with propylene as monomer are of highly crystalline nature and, therefore, relatively hard with little or no impact resistance at all so that they will come into question only for application fields in which those characteristics are desirable.

Most recently, various attempts have been made, aiming at preparing also polypropylene with elastic characteristics. European Printed Publication 0 707 016 A1 specifies a catalyst composition and a process for preparing polyolefins. The catalysts specified in European Printed Publication 0 707 016 A1 are, in substance, made up of a metallocene compound having an indene ring and a fluorene ring which are bridged via C, Si or Ge. In case of the metallocene compound, it, in this connexion, is obviously essential that, in the indene ring system, at least the residue denoted with R⁴ not be hydrogen. When that residue R⁴ is hydrogen, the effects, such as specified in the aforementioned European Patent Application, will not be attained (P 6, from L 57 up to P 7, L 3). The polymers specified in European Printed Publication 0 707 016 A1 and prepared with metallocenes, here especially the polypropylene prepared with those metallocenes, however, show as can be drawn from the examples and the graphs, but unsatisfactory characteristics in regard of the elastic behaviour.

Departing from all these facts, it is the object of the present invention to make polymers from olefinically unsaturated compounds available, not only showing thermoplastic but, at the same time, thermoplastic-elastic characteristics and, thus, being applicable for many application fields. It is a further object of the present invention to suggest a process suitable therefor and serving for preparing the polymers and to particularise the use thereof.

That object is, in regard of the polymers themselves, solved by the characterising features of Claim 1; in regard of the process for preparing the polymers, it is solved by the characterising features of Claim 11, and in regard of the use, it is solved by Patent Claim 18. The Subclaims show advantageous further developments.

According to the invention, linear, thermoplastic, elastic polymers from an olefinically unsaturated compound with an isotactic arrangement of the monomer units and a statistic distribution of isolated stereoscopic errors along the individual chains and a mean molecular weight Mw of the polymers within the range of from 100,000 to 800,000 gms/mol and a TG of from -50 to +30°C, thus, are suggested, binary, linear olefins which show an arbitrary or rather regular sequence of isotactic and atactic blocks being excluded.

With the polymer according to the invention, it is essential that the stereoscopic errors be situated in the polymer chain itself and that, thus, a specific pentad concentration result. In this connexion, it was found that, with the polymers according to the invention, the [rmrm] pentad with a maximum of 2.5 % of the entire pentad area will, in general, be present. In many cases, it was also found that that [rmrm] pentad was completely missing.

Furthermore, it became evident that, in most cases, the [rrrr] and [rrrm] pentads are always greater than the [rmrm] pentad. Determination of the pentad concentration in case of polymers has, properly speaking, become known from the state-of-the-art and is specified e.g. in J. A. Ewen, "Catalytic Polymerisation of Olefins", Eds. T. Keii, K. Soga; Kodanska Elsevier Pub.; Tokyo, 1986, P 271 et seqq. Also the pentad concentration determination according to the invention now present was carried out by means of the method specified in the above-mentioned piece of pertinent literature.

Apart from the above-mentioned specific pentad concentration, the linear, isotactic polymers according to the invention have a molecular weight within the range of from 100,000 to 800,000, of preference from 110,000 to 500,000 and of special preference within the range of from 120,000 to 300,000 gms/mol. The mean molecular weights Mw (mean weight value) of the polymers according to the invention were measured by means of the gel permeation chromatography (GPC) method at 135 °C with microstyragel as column material and 1, 2, 4-trichlorobenzole as solvent against closely distributed polypropylene standards. The molecular weight distribution Mw/Mn (mean weight value/mean numerical value) of the polymers according to the invention was likewise measured by means of the gel permeation chromatography method and generally amounts to from 1.2 to 3.5.

In addition to all that, the polymers according to the invention show a glass transition temperature Tg within the range of from -50 °C to +30 °C, of special preference a Tg of from -20 °C to +10 °C. The glass transition temperature was determined by means of the DSC method.

The linear, isotactic polymers according to the invention present, after all, a structure of one or several C₂ - C₂₀ olefins. In this case, the olefin is preferred to be a C₃ - C₂₀ - Alk-1-ene. Examples of such C₃ - C₂₀ - Alk-1-ene are: propene, 1-butene, 2-butene, 1-pentene, 1-hexene, 1-octene, 1-nonene, 1-decene, 1-dodecene, 1-hexadecene, 1-octadecene, 1-eicosene.

Apart from the already mentioned olefins, also C₅ - C₂₀ cycloolefins are of the especially suitable kind.

Examples thereof are cyclopentene, cyclohexene, norbornadiene and its derivatives.

In case of the linear, isotactic polymers, polypropylene is especially preferred. Further suitable polymers are copolymers from propylene and a C₄ - C₂₀ olefin or a cycloolefin. It is also possible to prepare terpolymers which show the characteristics defined in Patent Claim 1 when they present a structure of propylene, a C₂ - C₂₀ olefin and a cycloolefin.

The polymers according to the invention are e.g. soluble in toluol at a temperature within the range of from 20 to 80 °C; they show a distinct elastic behaviour in a tensile-strength test, measured with a "Standard Universal Testing Machine ZWICK 1445", as specified in the examples, and, in general, possess a crystallisation melting temperature, measured by means of the "Differential Scanning Calometry" (DSC) method within the range of from -50 °C to 150 °C. In particular, it has to be emphasised that, also in this case, the polymers according to the invention clearly differ, in regard of their elastic-thermoplastic behaviour, from the state-of-the-art, i.e. from European Printed Publication 0 707 016 A1 mentioned in the introductory part to the Description. This being so, the polymers according to the invention are particularly suited for the manufacture of articles of relatively good deformation resistance, such as e. g. sheathings for household appliances. Furthermore, it is worth mentioning that the polymers can be used in polymer mixtures for impact resistance modification. Due to their elastic characteristics, the polymers are especially suited for elastic sheets, moulded bodies, and gaskets.

The invention, furthermore, relates to a process for preparing linear, thermoplastic-elastic polymers from olefinically unsaturated compounds with an isotactic arrangement of the monomer unit and a statistic distribution of isolated stereoscopic errors along the individual chains, tacticity varying within the range of between 25 and 60 % [mmmm] pentad concentration. A regular sequence of isotactic and atactic blocks, therewith, is excluded. In many cases, it was found that the [rmrm] pentad was totally missing or present with a maximum of 2.5 % of the entire pentad area. Furthermore, it became evident that, in most cases, the [rrrr] and [rrrm] pentads are always greater than the [rmrm] pentad. The process (Patent Claim 11) according to the invention is specifically characterised in that a specially selected catalyst combination is used, containing, on the one hand, a specific, exactly defined metal complex and, on the other hand, an activator.

The metal complex is a metallocene compound. Herewith, metal compounds of the Fourth Auxiliary Group of the Periodic System Table IVB generally come into question, which compounds may be present as defined metal complexes and with which compounds activators are mixed. In general, the metals are present in the complexes in formally positively charged manner.

As regards the metals, titanium, zirconium, hafnium, vanadium, niobium, and tantalum specifically come into question, the metal atom preferably showing halogen or a C₁ - C₈ alkyl, aryl or benzyl as residue X.

The metallocene compound which is suited for preparing the linear, isotactic polymers according to Patent Claim 11 is defined by general Formula I. 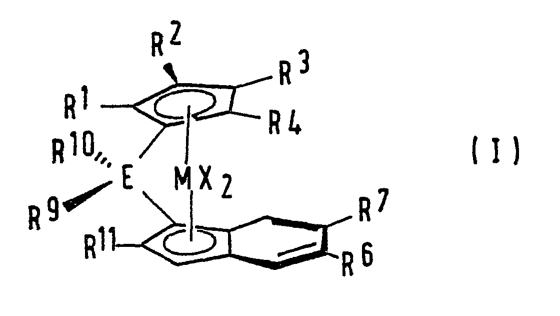 wherein the residues R¹ - R⁷ are a linear or branched C₁ - C₁₀ alkyl, a 5-7-linked cycloalkyl that, in its turn, may carry one or several C₁ - C₆ alkyl residues as substituents, a C₆ - C₁₈ aryl, aryl alkyl or alkyl aryl, in which case R¹, R²; R³, R⁴; and R⁶, R⁷, here again, my be partially or simultaneously integrated into 5-7-linked cycloalkyl or aryl rings fused thereto.

In case of the metallocene compound according to general Formula I, it is essential that, in general Formula I, the carbon atom adjacent to the residue R⁷ and the carbon atom adjacent to the residue R⁶ be, with the indene ring system, only hydrogen. Thereby, it is ensured that, with the indene ring system, a linear system can form by the residues R⁶ and R⁷, which system, obviously, will prove to be especially advantageous when preparing the isotactic elastomers according to the invention. In contrast to the metallocene complex according to European Printed Publication 0 707 016 A1, only hydrogen atoms and no carbon atoms with further residues, as is imperative in the aforementioned. European laying-open specification, can, thus, be found at the positions mentioned in the aforegoing.

In this connexion, suitable bridging structural units E are 1.2-ethyl, 1.3-propyl, 1.4-butyl, carbon, silicon or germanium. For the case that E is carbon, silicon or germanium, the bridging structural unit E may, herewith, additionally carry the residues R⁹ and R¹⁰ which, then, are a C₁ - C₈ alkyl, a 4-7-linked cycloalkyl or aryl, R⁹ and R¹⁰ being able to also form a 4-7-linked cycloalkyl or aryl jointly with E.

A particularly preferred embodiment of the invention resides in that such a metallocene complex is used as reflected by general Formula VII. 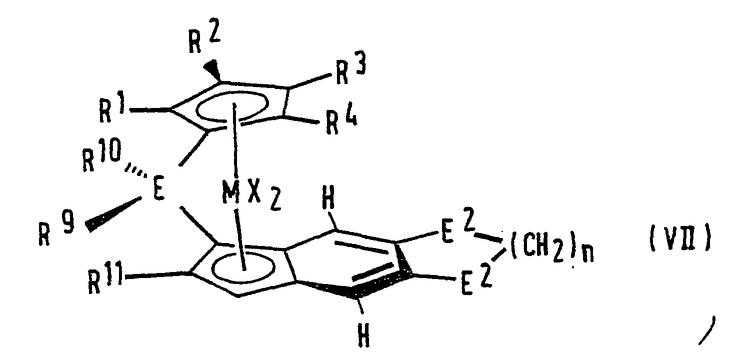 wherein all the residues have the significations indicated above. In contrast to the metallocene complex according to general Formula I, it, however, now is imperative here on the indene ring system that another ring fused thereto be at hand which is bridged via two E² groups.

E₂ therewith signifies CH₂, oxygen or sulphur and n is 1 or 2.

As defined in Patent Claim 11, it certainly is furthermore provided in accordance with the invention, to additionally use at least also one activator, apart from the metallocene compounds specified above. The invention, herewith, generally encompasses all the activators that have as yet become known in the state-of-the-art for metallocene compounds. Such activators have also been specified by European Printed Publication 0 707 016 A1. As activator, at least one compound of general Formulas II to VI is, however, used with special preference. Accordingly, the activator may be an open-chain or cyclic alumoxane compound of general Formula II or III, such as is reflected hereinafter: 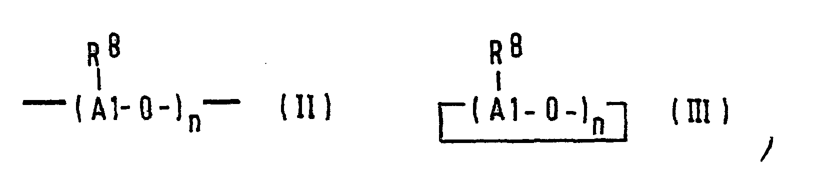 wherein R⁸ is a C₁ - C₄ alkyl group and n is a number between 5 and 30.

In case of the catalyst combination according to the invention, also the above-specified compounds of general Formulas II and III can, alone or in combination with the subsequent activators such as are reflected by general Formulas IV to VI, be used.

B (C₆F₅)₃ (IV)

R⁹ ₃C[B(C₆F₅)₄] (V)

[R⁹ ₃N H][B (C₆F₅)₄] (VI)

In general Formulas IV to VI, R⁹, in this connexion, signifies a C₁-C₄ alkyl group or an aryl group.

It has, therewith, proven to be especially favourable when the metallocene complex according to general Formula I and the activator according to general Formulas II to VI are employed in such quantities that the atomic ratio between aluminium from the alumoxane or boron from the cationic activator and the transition metal from the metallocene complex is within the range of from 1:1 to 10⁶:1.

Pressures of from 1 to 100 bars, preferably of from 3 to 20 bars and in particular of from 5 to 15 bars, have proven to be suitable reaction parameters for preparing the linear, thermoplastic, elastomeric olefin polymers. Favourable temperatures are within the range of from -50 °C to 200 °C, of preference at from 100 to 150 °C and of high preference at from 20 to 50 °C.

The polymerisation reactions can be carried out in the gas phase, in suspension and in supercritical monomers and especially in solvents inert under polymerisation conditions. In particular the solution polymerisation has proven to be the clearly superior thing for the present preparation process. Suitable inert solvents for that purpose are such solvents that do not contain any reactive groups in the molecule, i. e. aromatic solvents like benzole, toluol, xylol, ethyl benzole or alkanes such as e. g. propane, n-butane, i-butane, pentane, hexane, heptane or mixtures thereof.

The polymers according to the invention are particularly suited for the making of fibres, sheets, and moulded bodies and highly suited for such application cases that make impact resistance a precondition. The polymers according to the invention can, furthermore, be utilised as blend components in plastic materials, especially in such plastic materials that are to be of the impact resistant kind.

The present invention will, hereinafter, be explained in more detail on the basis of several preparation examples of the catalysts and on the basis of polymerisation examples. Herewith, there show:
- Fig. 1: tensile-strength measurements on two polymers according to the invention, as compared to two polymers from European Printed Publication 0 707 016 A1,

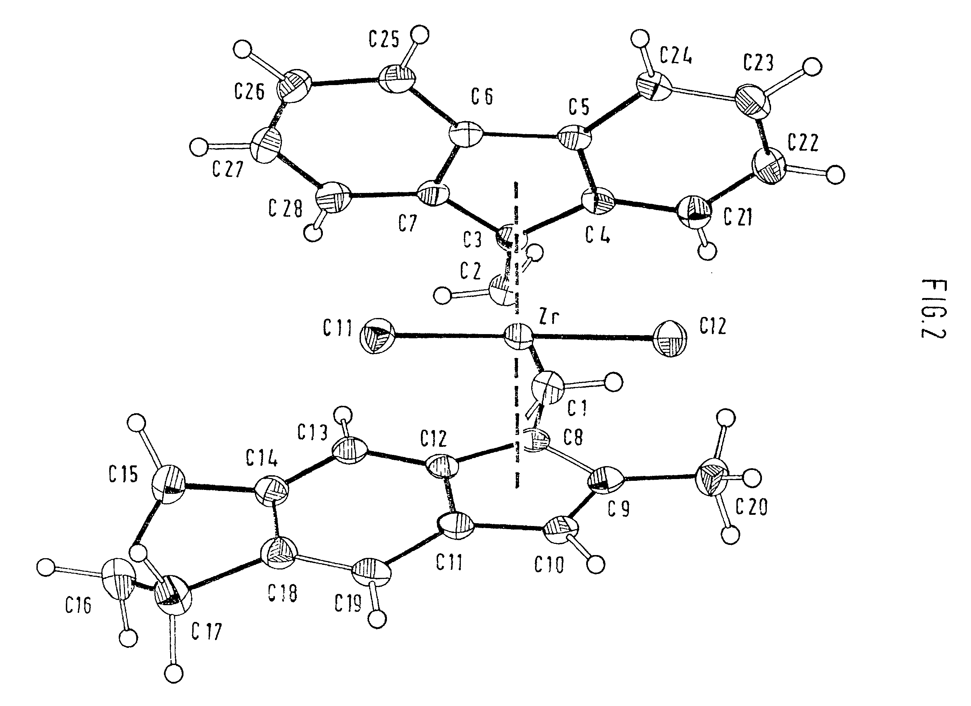

- Fig. 2: an X-ray structure analysis of a metallocene complex according to the invention,

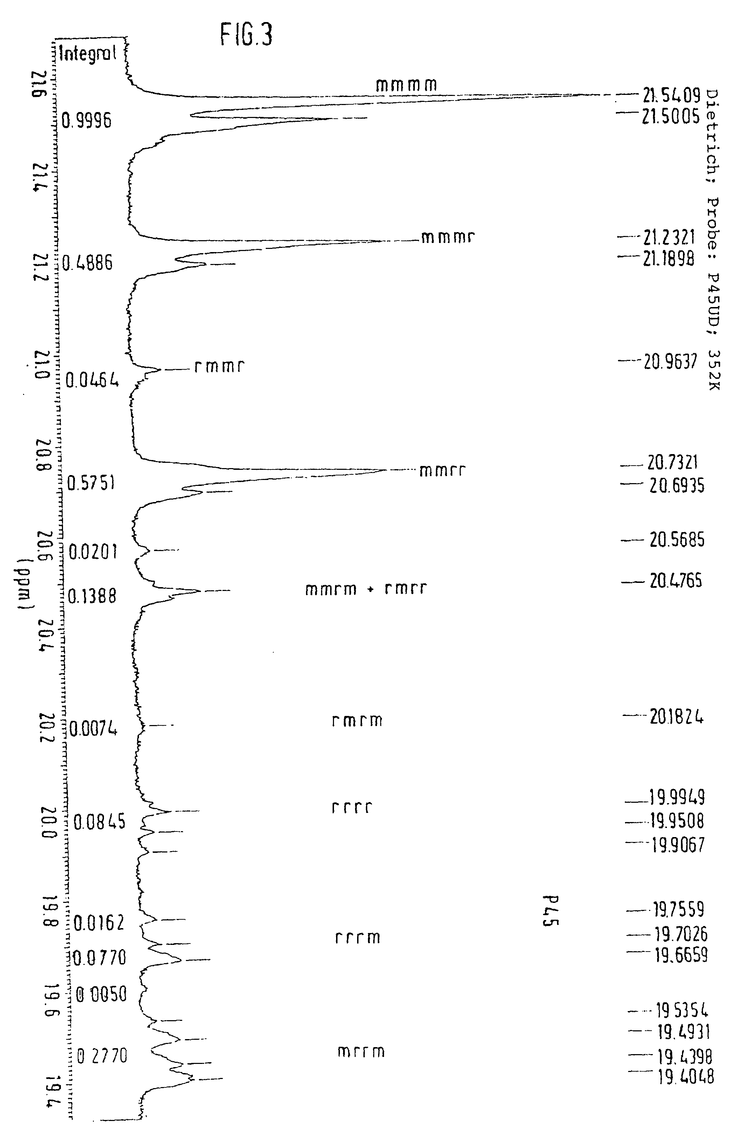

- Fig. 3: a nuclear magnetic resonance (NMR) spectrum of a polymer according to the invention, and
- Fig. 4: a nuclear magnetic resonance (NMR) spectrum of another polymer according to the invention.

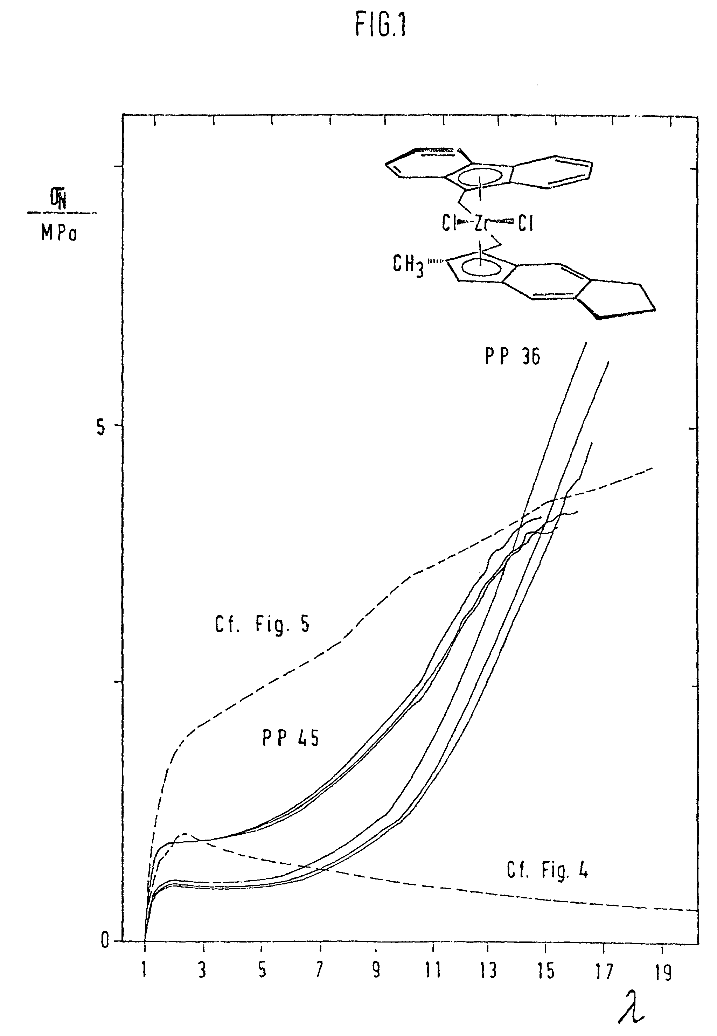

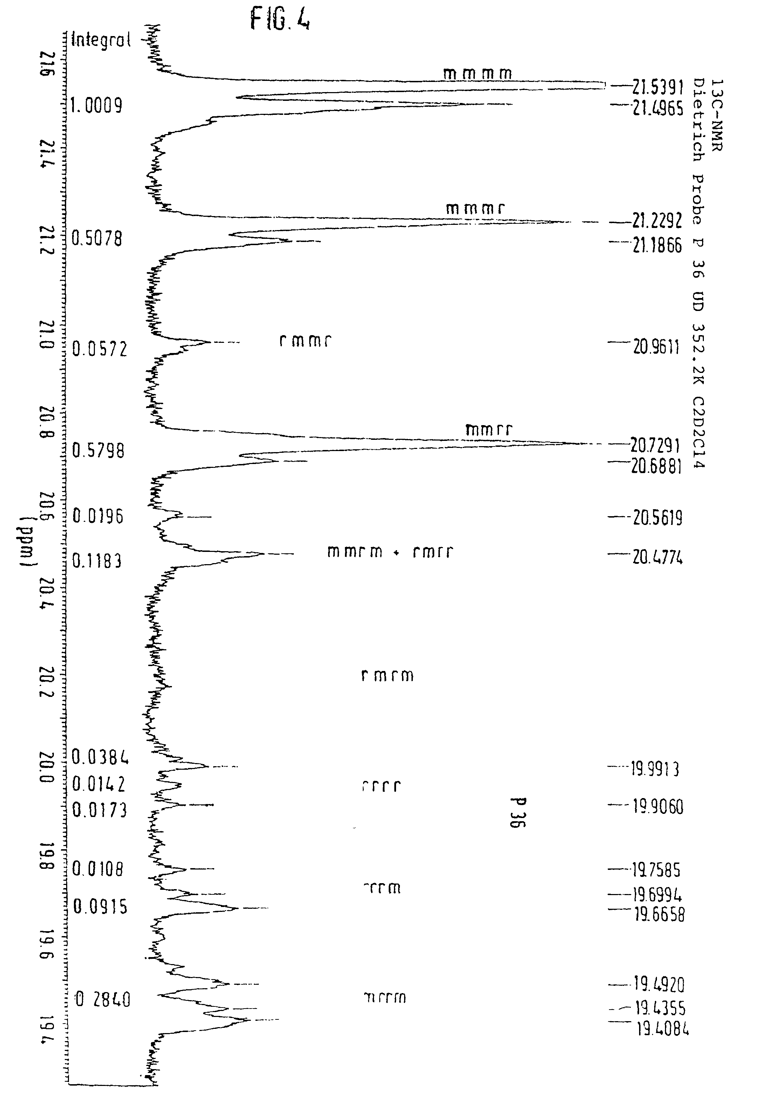

Fig. 1 now illustrates the tensile-strength measurements of two selected examples from European Printed Publication 0 707 016 A1, as compared to two polymers prepared in accordance with the invention. By the remarks "Cf. Fig. 4" and "Cf. Fig. 5" in Fig. 1, the corresponding examples from European Printed Publication 0 707 016 A1 are meant in this case. As can be drawn from a comparison of those tensile-strength curves with the tensile-strength curves of the polymers (PP 36 and PP 45) prepared according to the invention, the polymers according to the invention show a distinctive, rubber-elastic plateau. Contrary thereto, the polymers according to European Printed Publication 0 707 016 A1 present either a flow behaviour (Fig. 4) or the polymer breaks in case of higher expenditures of force (Fig. 5). It is just that comparison that clearly illustrates the surprising characteristics of the polymers prepared according to the invention and showing a distinctive, rubber-elastic behaviour.

### Catalyst preparation

### Obtaining of 5.6-cyclopenta-2-methyl-indane-1-one

40.4 mL of methacryl acid chloride (387.9 mmols) are, together with 62.06 gms of anhydrous aluminium chloride (20 mol% in excess), incorporated into 250 mL of CH₂Cl₂, cooled down to -78 °C, and slowly mixed with 50.0 mL of indane (45.84 gms, 387.9 mmols). As the indane is added, the colour changes from bright yellow to orange. The mixture is carefully quenched with diluted HCl*aq, washed with hydrous K₂CO₃ solution and water, and dried through Na₂SO₄.

Yield: 70.07 gms (376.2 mmols) of oily product, 97.0 % of the theory NMR (200 mcps, CDCl3 7.24 ppm): δ 1.25 ppm d (J = 6.9 cps) 3 H methyl group, δ 2.10 ppm m (J = 3.7 to 7.6 cps) 2 H aliphatic protons of the cycles, δ 2.62 ppm m 2 H aliphatic protons of the indanone ring, δ 2.86 ppm m (J = 11 to 14 cps) 4 H aliphatic protons of the cycles, δ 3.25 ppm m (J = 7.0 cps) 1 H aliphatic proton of the indanone system, δ 7.21 and 7.51 ppm s 2 H aromatic MS (GC-MS) m/z 186 (M+ 100 %), (186, 251 mol-1).

### Obtaining of 5.6-cyclopenta-2-methylindane-1-ole

70.07 gms (376.2 mmols) of the 2-methyl-5.6-cyclopentylindane-1-one are, with 5 gms of LiAlH₄, reduced in 200 mL of Et₂0 by letting the ketone drip (2 hrs) slowly towards an ice-cooled suspension of LiAlH₄. Agitating is effected all through the night and quenching with H₂0 is carried out, the colour of the solution changing from lime green to bright yellow. Now 15 mL of HCl are added in concentrated manner and the emulsion is agitated for 1 h. The etherial phase is separated, neutralised with 200 mL of K₂CO₃ solution, and three times washed with water. Thereafter, drying is effected through Na₂SO₄ and the solvent is completely removed. A crystalline mixture of the diastereomeric 1-indanoles is obtained. NMR (200 mcps, CDCl₃): δ 1.13 ppm d 3 H methyl group, δ 1.76 ppm wide 1 H OH group, δ 2.05 ppm m 2 H aliphatic protons of the cycles, δ 2.15 to 2.71 ppm m 2 H aliphatic protons of the indanole ring, δ 2.87 ppm m 4 H aliphatic protons of the cycles, δ 3.08 ppm 1 H aliphatic proton of the indanole system, δ 4.17 and 4.93 ppm d 2 H with OH function on the indanole ring, δ 7.08 and 7.23 ppm d 2 H aromatic.

Yield: 69.62 gms, 369.8 mmols, 98.3 % of the theory MS (GC-MS) m/z 188 (M+ 100 %), (188.267 gms mol⁻¹).

### Obtaining of 5.6-cyclopenta-2-methylindene

69.62 gms (369.8 mmols) of the diastereomer mixture of the 2-methyl-5.6-cyclopentylindene-1-oles are dissolved in 500 mL of benzole; and then 3 to 5 gms of p-TosOH are added and the emulsion is, for three quarters of an hour, boiled on the water separator under reflux. The organic phase is separated, neutralised with 200 mL of K₂CO₃ solution, and three times washed with water. Thereafter, drying is effected through Na₂SO₄ and the solvent is completely removed.

The product colourlessly crystallises from n-pentane; yield: 57.67 gms, 338.7 mmols corresponding to 91.6 % of the theory MS (GC-MS) m/z 170 (M+ 100 %), (170.225 gms mol⁻¹). NMR (200 mcps, CDCl3 7,24 ppm) : δ 2.23 ppm m/s 5 H methylene and 2-methyl group of the indene system, δ 3.01 ppm t 4 H methylene groups, δ 3.32 ppm s 2 H methylene group acids, δ 6.51 ppm s 1 H olefinic indene system, δ 7.20 and 7.34 ppm s 2 H aromatic, 13-NMR (200 mcps, CDCl₃): δ 16.8 ppm methyl group, δ 25.8 ppm methylene group of Cycle 5, δ 32.66 and 32.72 ppm methylene groups of the Cycle, δ 42.2 ppm methylene group of the indene system, δ 127.1 ppm tertiary C-atom of the indene system, δ 115.5 and 119.5 (each with H) ppm aromatic C-atoms, the same without H for 139.6, 141.7, 142.1, 144.4, and 145.0 ppm incl 4° olefinic C-atom of the indene system (cf. CH correlation and HH-COSY).

### Obtaining of 1-(9 fluorenyl)-2(1-(5.6-cyclopenta-2-methyl)indenyl)ethane

3.89 gms of 2-methyl-5.6-cyclopentylindene-1 (22.85 mmols) are, with 14.3 mL of n-BuLi, deprotonated in 150 mL of dioxane and then mixed with a solution of 25.13 mmols of 2-(9'-fluorenyl)ethyltrifluoromethane sulphonate in 100 mL of dioxane. Agitating is effected all through the night, heating up to 60 °C is carried out for half an hour and the solution is quenched with ca. 3 mL of H₂O. The dioxane is removed and the product is extracted with three times 200 mL of Et₂O. Without chromatographic processing, 6.49 gms (17.9 mmols, 78.3 % of the theory) of a colourless, crystalline Product are obtained.

NMR (200 mcps, CDC13, 7.24 ppm): δ 1.89 ppm s 3 H methyl group, δ 1.41 ppm to 1.72 ppm m 4 H aliphatic protons of the bridge, δ 2.10 ppm pseudo-t 2 H aliphatic protons of the cycle, δ 2.90 ppm pseudo-t 4 H aliphatic protons of the cycle, δ 3.87 ppm t 1 H aliphatic proton of the fluorene system, δ 6.40 ppm s 1 H indene proton, δ 6.98 and 7.07 ppm aromatic protons of the indene system, δ 7.31 to 7.77 ppm m 8 H aromatic of the fluorene. MS (FD) m/z 362.5 (M+ 100 %).

### Obtaining of 1-(9 fluorenyl)-2-(1-(5.6-cyclopenta-2-methyl) indenyl)ethane zirconocene dichloride

1.711 gms of 1-[1'-(2'-methyl)5', 6'-cyclopentylindenyl-2-(9"-fluorenyl)] ethane (4.72 mmols) are dissolved in 100 mL of toluol, mixed with 10 mL of dioxane, and deprotonated, at low temperature, with 5.9 mL of n-BuLi. Agitating is effected for ca. 1 hour and then the suspension is again cooled down to -78 °C. Now 1.10 gm of ZrCl₄ is added. That suspension is agitated, at room temperature, for another 14 hours, in which case a fine red powder forms that can be crystallised after a separation of formed LiCl from toluol.

Yield: 2.148 gms (4.11 mmols, 87.1 % of the theory). NMR (500 mcps, C₂D₂Cl₄ 80 °C) ; δ 2.00 ppm m 2 H methylene group cyclopentane ring (J = 6.8 to 7.5 cps), δ 2.15 ppm s 3 H methyl group, δ 2.79 to 2.94 ppm m 4 H methylene groups cyclopentane ring adjacent to the aromatic system (J = 7.5 to 9.7 cps), δ 4.05 ppm m (J = 3.5 to 13.2 cps) 2 H aliphatic protons of the bridge (in case of the fluorene), δ 3.83 and 4.57 ppm m (J = 4.2 to 10.0 cps) 1 H aliphatic protons of the bridge (diastereotopic) at a time, δ 6.05 ppm s 1 H indene proton, δ 7.03 to 7.85 ppm m 10 H aromatic.

MS (El) m/z 5, 22, 6 isotopic pattern corresponding to natural distribution.

EA CH-combustion analysis: calculated 64.35 % C 4, 63 % H
Found: 64.08/63.89 % 4.53/4.63 %

### Polymerisation example

All the polymerisations were carried out in 300 mL of toluol under the conditions indicated in Table 1.

The NMR data were measured by means of a Bruker AMX 500 device and evaluated on the basis of literature data.

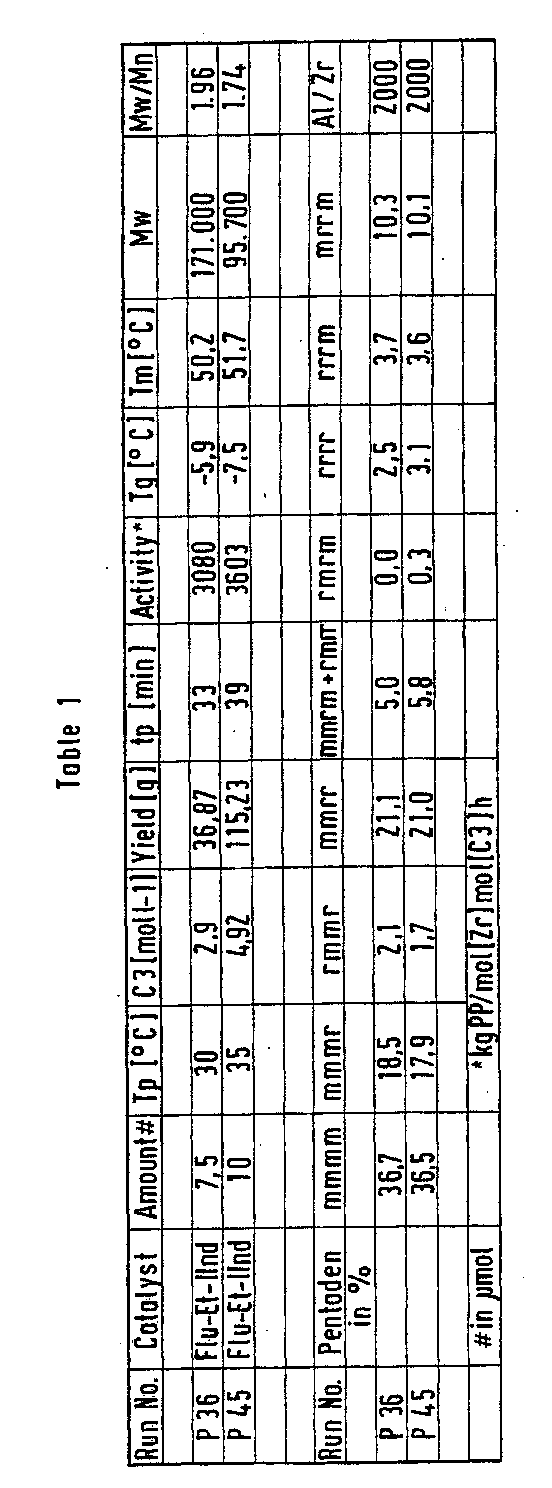

## Claims

1. Linear, isotactic polymer which has a structure of at least one monomer of a C₂ to C₂₀ olefin and of which the isotacticity, due to a statistic distribution of isolated stereoscopic errors in the polymer chain, varies within the range of between 25 and 60 % of [mmmm] pentad concentration, with the proviso that an arbitrary or rather regular sequence of isotactic and atactic blocks is excluded, the polymer having a mean molecular weight Mw within the range of from 100,000 to 800.000 gms/mol and a TG of from -50 to +30°C obtainable by a process in which a C₂ to C₂₀ olefin and an activator are reacted in the presence of a catalyst combination containing a metal complex of general Formula I 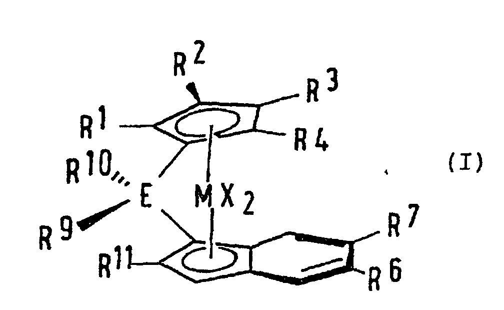 wherein the substituents have the following significations:
R₁ - R₇ linear or branched C₁ to C₁₀ alkyl, 5- to 7-linked cycloalkyl which, in its turn, can carry one or several C₁ to C₆ alkyl residues as substituent, C₆ to C₁₈ aryl or arylalkyl or alkylaryl, in which case R¹/R², R³/R⁴, R⁶/R⁷ can be partially or simultaneously integrated into 5- to 7-linked cycloalkyl or aryl rings fused thereto;
R⁹, R¹⁰ C₁ to C₈ alkyl, 4- to 7-linked cycloalkyl, aryl, in which case R⁹, R¹⁰ can, jointly with E, form a 4- to 7-linked cycloalkyl or aryl;
R¹¹ C₁ to C₈ alkyl, aryl, C₁ to C₈ oxyalkyl, C₁ to C₈ trialkylsiloxy;
M titanium, zirconium, hafnium, vanadium, niobium, tantalum;
X halogen or C₁ to C₈ alkyl, aryl, benzyl;
E carbon, silicon, germanium or 1.2ethyl, 1.3-propyl, 1.4-butyl.

2. Isotactic polymer according to Claim 1,
**characterised in,**
**that** the [rmrm] pentad amounts to a maximum of 2.5 % of the entire pentad area and each of the [rrrr] and [mrrr] pentads is greater than the [rmrm] pentad.

3. Isotactic polymer according to at least one of the Claims 1 or 2, **characterised in that** the polymer has a thermoplastic-elastic behaviour.

4. Isotactic polymer according to at least one of claims 1 to 3, **characterised in that** the olefin is a C₃ to C₂₀ alk-1-ene.

5. Isotactic polymer according to Claim 4, **characterised in that** the alk-1-ene is selected from propene, 1-butene, 2-butene, 1-pentene, 1-hexene, 1-octene, 1-nonene, 1-decene, 1-dodecene, 1-hexadecene, 1-octadecene, 1-eicosene.

6. Isotactic polymer according to at least one of Claims 1 to 3, **characterised in that** the olefin is a C₅ to C₂₀ cycloolefin.

7. Isotactic polymer according to Claim 6, **characterised in that** the cycloolefin is selected from cyclopentene, cyclohexene, norbonene and its derivates.

8. Isotactic polymer according to at least one of Claims 1 to 7, **characterised in that** it is polypropylene.

9. Isotactic polymer according to at least one of Claims 1 to 7, **characterised in that** it is a copolymer having a structure of propylene and a C₄ - C₂₀ olefin and/or cycloolefin.

10. Isotactic polymer according to at least one of Claims 1 to 7, **characterised in that** it is a terpolymer having a structure of propylene, C₂ - C₂₀ olefin and a cycloolefin.

11. Process for preparing linear isotactic polymers which have a structure of at least one monomer of a C₂ to C₂₀ olefin and of which the is a isotacticity, due to a statistic distribution of isolated stereoscopic errors in the polymer chain, varies within the range of between 25 and 60 % of [mmmm] pentad concentration, with the proviso than an arbitrary or rather regular sequence of isotactic and atactic blocks is excluded, the polymer having a mean molecular weight Mw within the range of from 100,000 to 800.000 gms/mol and a TG of from -50 to +30°C, the process comprises reacting a C₂ to C₂₀ olefin and an activator in the presence of a catalyst combination containing a metal complex of general Formula I 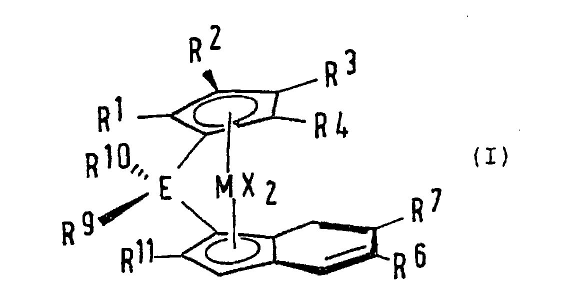 wherein the substituents have the following significations:
R₁ - R7 linear or branched C₁ to C₁₀ alkyl, 5- to 7-linked cycloalkyl which, in its turn, can carry one or several C₁ to C₆ alkyl residues as substituent, C₆ to C₁₈ aryl or arylalkyl or alkylaryl, in which case R¹/R², R³/R⁴, R⁶/R⁷ can be partially or simultaneously integrated into 5- to 7-linked cycloalkyl or aryl rings fused thereto;
R⁹, R¹⁰ C₁ to C₈ alkyl, 4- to 7-linked cycloalkyl, aryl, in which case R⁹, R¹⁰ can, jointly with E, form a 4- to 7-linked cycloalkyl or aryl;
R¹¹ C₁ to C₈ alkyl, aryl, C₁ to C₈ oxyalkyl, C₁ to C₈ trialkylsiloxy;
M titanium, zirconium, hafnium, vanadium, niobium, tantalum;
X halogen or C₁ to C₈ alkyl, aryl, benzyl;
E carbon, silicon, germanium or 1.2-ethyl, 1.3-propyl, 1.4-butyl.

12. Process according to Claim 11, **characterised in that** the activator is an open-chain or cyclix alumoxane compound of general Formula II or III 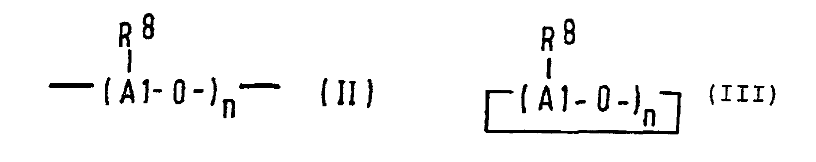 R⁸ standing for a C₁ to C₄ alkyl group and n standing for a number between 5 and 30, and/or a cationic activator or general Formulas IV to VI
B(C₆F₅)₃ (IV)
R⁹ ₃C[B(C₆F₅)₄] (V)
[R⁹ ₃NH][B (C₆F₅)₄] (VI)
R⁹ signifying a C₁ to C₄ alkyl group or an aryl group.

13. Process according to Claim 11 or 12, **characterised in that** the metal complex according to general Formula I preferably is a compound of general Formula VII 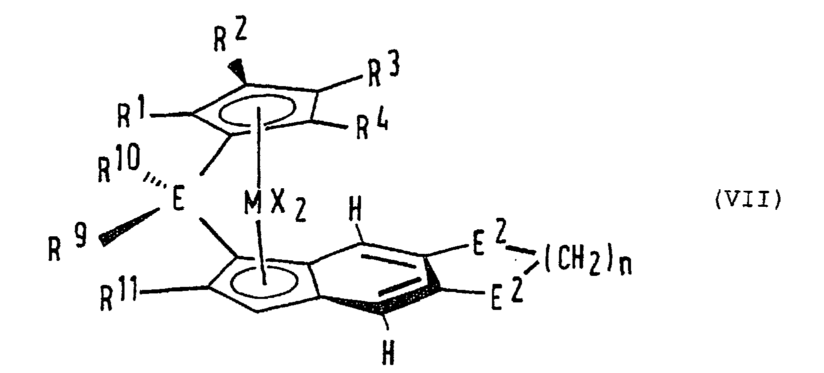 wherein the residues R¹ to R¹¹ have the significations indicated in general Formula I and E² = CH₂, O or S and n = 1 or 2.

14. Process according to at least one of Claims 11 to 13, **characterised in that** the metallocene complex of general Formula I and the activator according to general Formulas II to VI are utilised in such quantaties that the atomic ratio between aluminium form the alumoxane and/or boron form the cationic activator and the transition metal from the metallocene complex is within the range of from 1:1 to 10⁶:1.

## Patentansprüche

1. Lineares isotaktisches Polymer, das eine Struktur von mindestens einem Monomer eines C₂ - C₂₀-Olefins aufweist und dessen Isotaktizität durch eine statistische Verteilung von isolierten Stereofehlern in der Polymerkette im Bereich zwischen 25 und 60% [mmmm]-Pentadenkonzentration variiert, mit der Maßgabe, daß eine willkürliche oder auch regelmäßige Abfolge von isotaktischen und ataktischen Blöcken ausgeschlossen ist, wobei das Polymer ein mittleres Molekulargewicht Mw im Bereich 100.000 bis 800.000 g/mol und einen TG von -50 bis 30°C aufweist, erhältlich durch ein Verfahren, bei dem ein C₂- bis C₂₀-Olefin und ein Aktivator in Gegenwart einer Katalysatorkombination enthaltend einen Metallkomplex der allgemeinen Formel I umgesetzt wird, 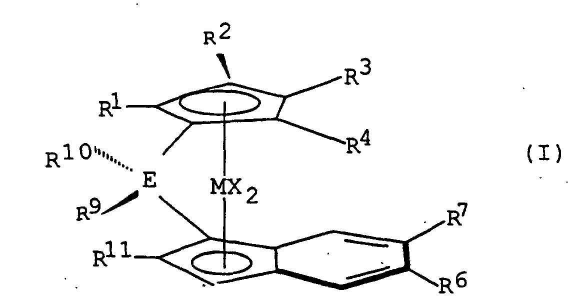 in der die Substituenten folgende Bedeutung haben:
R¹-R⁷ lineares oder verzweigtes C₁- bis C₁₀-Alkyl, 5- bis 7-gliedriges Cycloalkyl, das seinerseits einen oder mehrere C₁- bis C₆-Alkylreste als Substituent tragen kann, C₆- bis C₁₈-Aryl oder Arylalkyl oder Alkylaryl, wobei R¹/R², R³/R⁴, R⁶/R⁷ teilweise oder gleichzeitig in 5- bis 7-gliedrige ankondensierte Cycloalkyl- oder Arylringe eingebunden sein können;
R⁹, R¹⁰ C₁- bis C₈-Alkyl, 4- bis 7-gliedriges Cycloalkyl, Aryl, wobei R⁹, R¹⁰ gemeinsam mit E ein 4-7-gliedriges Cycloalkyl oder Aryl bilden kann;
R¹¹ C₁- bis C₈-Alkyl, Aryl, C₁- bis C₈-Oxyalkyl, C₁- bis C₈-Trialkylsiloxy;
M Titan, Zirkonium, Hafnium, Vandadium, Niob, Tantal;
X Halogen oder C₁- bis C₈-Alkyl, Aryl, Benzyl;
E Kohlenstoff, Silicium, Germanium oder 1.2-Ethyl, 1.3-Propyl, 1.4-Butyl.

2. Isotaktisches Polymer nach Anspruch 1,
**dadurch gekennzeichnet,**
**daß** die [rmrm]-Pentade maximal 2,5% der gesamten Pentadenfläche beträgt und die [rrrr]- und die[mrrr]-Pentaden jeweils größer als die [rmrm]-Pentade sind.

3. Isotaktisches Polymer nach mindestens einem der Ansprüche 1 oder 2,
**dadurch gekennzeichnet, daß** das Polymer ein thermoplastisch-elastisches Verhalten hat.

4. Isotaktisches Polymer nach mindestens einem der Ansprüche 1 bis 3,
**dadurch gekennzeichnet, daß** das Olefin ein C₃bis C₂₀-Alk-1-en ist.

5. Isotaktisches Polymer nach Anspruch 4,
**dadurch gekennzeichnet, daß** das Alk-1-en ausgewählt ist aus Propen, 1-Buten, 2-Buten, 1-Penten, 1-Hexen, 1-Octen, 1-Nonen, 1-Decen, 1-Dodecen, 1-Hexadecen, 1-Octadecen, 1-Eicosen.

6. Isotaktisches Polymer nach mindestens einem der Ansprüche 1 bis 3,
**dadurch gekennzeichnet, daß** das Olefin ein C₅bis C₂₀-Cycloolefin ist.

7. Isotaktisches Polymer nach Anspruch 6,
**dadurch gekennzeichnet, daß** das Cycloolefin ausgewählt ist aus Cyclopenten, Cyclohexen, Norbornen und seinen Derivaten.

8. Isotaktisches Polymer nach mindestens einem der Ansprüche 1 bis 7,
**dadurch gekennzeichnet, daß** es Polypropylen ist.

9. Isotaktisches Polymer nach mindestens einem der Ansprüche 1 bis 7,
**dadurch gekennzeichnet, daß** es ein Copolymer mit einer Struktur aus Propylen und einen C₄-C₂₀-Olefin und/oder Cycloolefin ist.

10. Isotaktisches Polymer nach mindestens einem der Ansprüche 1 bis 7,
**dadurch gekennzeichnet, daß** es ein Terpolymer mit einer Struktur aus Propylen, einem C₂-C₂₀-Olefin und einem Cycloolefin ist.

11. Verfahren zur Herstellung von linearen isotaktischen Polymeren, die eine Struktur von mindestens einem Monomer eines C₂- bis C₂₀-Olefin aufweisen und deren Isotaktizität durch eine statistische Verteilung von Stereofehlern in der Polymerkette im Bereich von 25 bis. 60% [mmmm]-Pentadenkonzentration variiert, mit der Maßgabe, daß eine willkürliche oder eher regelmäßige Abfolge von isotaktischen und ataktischen Blöcken ausgeschlossen ist, und das Polymer ein mittleres Molekulargewicht Mw im Bereich von 100.000 bis 800.000 g/mol und einen TG von -50 bis 30°C aufweist, wobei das Verfahren die Reaktion eines C₂- bis C₂₀-Olefins und eines Aktivators in Gegenwart einer Katalysatorkombination enthaltend einen Metallkomplex der allgemeinen Formel I umfaßt, 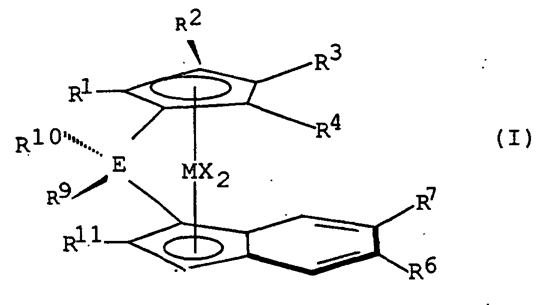 in der die Substituenten folgende Bedeutung haben:
R¹-R⁷ lineares oder verzweigtes C₁- bis C₁₀-Alkyl, 5- bis 7-gliedriges Cycloalkyl, das seinerseits einen oder mehrere C₁ - bis C₆-Alkylreste als Substituent tragen kann, C₆- bis C₁₈-Aryl oder Arylalkyl oder Alkylaryl, wobei R¹/R², R³/R⁴, R⁶/R⁷ teilweise oder gleichzeitig in 5- bis 7-gliedrige ankondensierte Cycloalkyl- oder Arylringe eingebunden sein können;
R⁹, R¹⁰ C₁- bis C₈-Alkyl, 4- bis 7-gliedriges Cycloalkyl, Aryl, wobei R⁹, R¹⁰ gemeinsam mit E ein 4-7-gliedriges Cycloalkyl oder Aryl bilden kann;
R¹¹ C₁- bis C₈-Alkyl, Aryl, C₁- bis C₈-Oxyalkyl, C₁- bis C₈-Trialkylsiloxy;
M Titan, Zirkonium, Hafnium, Vandadium, Niob, Tantal;
X Halogen oder C₁- bis C₈-Alkyl, Aryl, Benzyl;
E Kohlenstoff, Silicium, Germanium oder 1.2-Ethyl, 1.3-Propyl, 1.4-Butyl.

12. Verfahren nach Anspruch 11,
**dadurch gekennzeichnet,**
**daß** der Aktivator eine offenkettige oder cyclische Alumoxanverbindung der allgemeinen Formel II oder III, 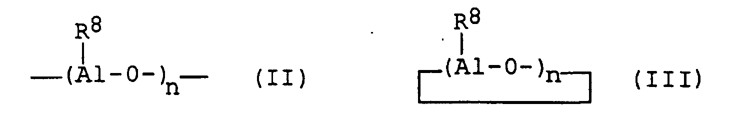 wobei R⁸ für eine C₁- bis C₄-Alkylgruppe und n für eine Zahl zwischen 5 und 30 steht, und/oder ein kationischer Aktivator der allgemeinen Formeln IV-VI
B(C₆F₅)₃ (IV)
R⁹ ₃C[B(C₆F₅)₄] (V)
[R⁹ ₃NH] [B(C₆F₅)₄] (VI)
wobei R⁹ eine C₁- bis C₄-Alkylgruppe oder eine Arylgruppe bedeutet, ist.

13. Verfahren nach Anspruch 11 oder 12,
**dadurch gekennzeichnet, daß** der Metallkomplex nach der allgemeinen Formel I bevorzugt eine Verbindung der allgemeinen Formel VII ist, 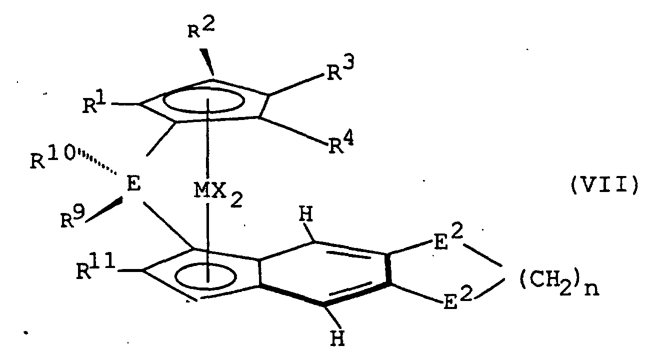 worin die Reste R¹ bis R¹¹ die in der allgemeinen Formel I angegebene Bedeutung besitzen und E² = CH₂, O oder S und n = 1 oder 2 ist.

14. Verfahren nach mindestens einem der Ansprüche 11 bis 13,
**dadurch gekennzeichnet, daß** der Metallocenkomplex der allgemeinen Formel I und der Aktivator nach den allgemeinen Formeln II-VI in solchen Mengen verwendet werden, daß das atomare Verhältnis zwischen Aluminium aus dem Alumoxan und/oder Bor aus dem kationischen Aktivator und dem Übergangsmetall aus dem Metallocenkomplex im Bereich von 1:1 bis 10⁶:1 liegt.

## Revendications

1. Polymère isotactique linéaire qui a une structure d'au moins un monomère oléfinique en C₂ à C₂₀, et dont l'isotacticité, une distribution statistique d'erreurs stéréoscopiques isolées dans la chaîne polymère, varie dans la plage allant de 25 à 60 % de la concentration de la pentade [mmmm], avec comme condition qu'une séquence arbitraire ou plutôt régulière de blocs isotactiques ou atactiques est exclue, le polymère ayant un poids moléculaire moyen Mw dans la plage allant de 100 000 à 800 000 g/mol et une TG de -50 à +30 °C, susceptible d'être obtenu par un procédé dans lequel une oléfine en C₂ à C₂₀ et un activateur réagissent en présence d'une combinaison de catalyseurs contenant un complexe métallique de la formule générale I : 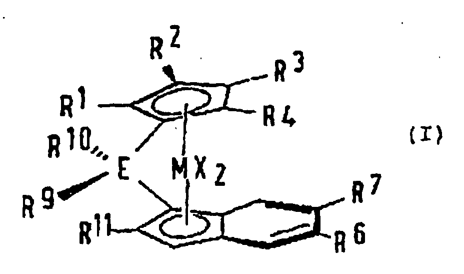 dans laquelle les substituants ont les significations suivantes :
R¹-R⁷ : alkyle en C₁ à C₁₀ linéaire ou ramifié, cycloalkyle lié en position 5-à 7-, qui peut, à son tour, porter un ou plusieurs radicaux d'alkyle en C₁ à C₆ comme substituant, aryle ou arylalkyle ou alkylaryle en C₆ à C₁₈, auquel cas R¹/R², R³/R⁴, R⁶/R⁷ peuvent être partiellement ou simultanément intégrés à des noyaux cycloalkyle ou aryle liés en position 5- à 7-, qui y sont condensés.
R⁹, R¹⁰ : alkyle en C₁ à C₈, cycloalkyle lié en 4 à 7, aryle, auquel cas R⁹, R¹⁰ peuvent, conjointement avec E, former un ou aryle ou ; cycloalkyle lié en position 4 à 7
R¹¹ : alkyle en C₁ à C₈, aryle, oxyalkyle en C₁ à C₈, trialkylsiloxy en C₁ à C₈ ;
M : titane, zirconium, hafnium, vanadium, niobium, tantale ;
X : halogène ou alkyle en C₁ à C₈, aryle, benzyle ;
E : carbone, silicium, germanium, ou 1,2-éthyle, 1,3-propyle, 1,4-butyle.

2. Polymère isotactique selon la revendication 1, **caractérisé en ce que** les quantités de la pentade [rmrm] jusqu'à un maximum de 2,5 % de la zone entière de la pentade et chacune des pentades [rrrr] et [mrrr] sont supérieures à la pentade [rmrm].

3. Polymère isotactique selon au moins l'une des revendications 1 ou 2, **caractérisé en ce que** le polymère a un comportement élastique thermoplastique.

4. Polymère isotactique selon au moins l'une des revendications 1 à 3, **caractérisé en ce que** l'oléfine est un alk-1-ène en C₃ à C₂₀.

5. Polymère isotactique selon la revendication 4, **caractérisé en ce que** l'alk-1-ène est choisi parmi le propène, le 1-butène, le 2-butène, le 1-pentène, le 1-hexéne, le 1-octène, le 1-nonéne, le 1-décène, le 1-dodécène, le 1-hexadécène, le 1-octadécène, le 1-eicosène.

6. Polymère isotactique selon au moins l'une des revendications 1 à 3, **caractérisé en ce que** l'oléfine est une cyclo-oléfine en C₅ à C₂₀.

7. Polymère isotactique selon la revendication 6, **caractérisé en ce que** la cyclo-oléfine est choisie parmi le cyclopentène, le cyclohexène, le norbonène et ses dérivés.

8. Polymère isotactique selon au moins l'une des revendications 1 à 7, **caractérisé en ce qu'**il est du polypropylène.

9. Polymère isotactique selon au moins l'une des revendications 1 à 7, **caractérisé en ce qu'**il est un copolymère ayant une structure de propylène et une oléfine en C₄ à C₂₀ et/ou une cyclo-oléfine.

10. Polymère isotactique selon au moins l'une des revendications 1 à 7, **caractérisé en ce qu'**il est un terpolymère ayant une structure de propylène, une oléfine en C₂ à C₂₀ et une cyclo-oléfine.

11. Procédé pour la préparation de polymères isotactiques linéaires qui ont une structure d'au moins un monomère d'une oléfine en C₂ à C₂₀ et dont l'isotacticité, due à une distribution statistique d'erreurs stéréoscopiques isolées dans la chaîne polymère, varie dans la plage allant de 25 à 60 % de la concentration de la pentade [mmmm], avec comme condition qu'une séquence arbitraire ou plutôt régulière de blocs isotactiques et atactiques soit exclue, le polymère ayant un poids moléculaire moyen Mw dans la plage de 100 000 à 800 000 g/mol et une TG de - 50 à +30 °C, ce procédé comprend la réaction d'une oléfine en C₂ à C₂₀ et d'un activateur en présence d'une combinaison de catalyseurs contenant un complexe de métaux de la Formule générale I : 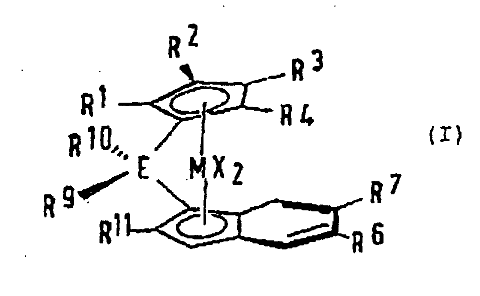 dans laquelle les substituants ont les significations suivantes:
R1-R7 : alkyle en C₁ à C₁₀ linéaire ou ramifié, cycloalkyle lié en 5 à 7 qui peut, à son tour, porter un ou plusieurs résidus alkyle en C₁ à C₆ comme substituant, aryle ou arylalkyle ou alkylaryle en C₆ à C₁₈, auquel cas R¹/R², R³/R⁴, R⁶/R⁷ peuvent être partiellement ou simultanément intégrés dans des noyaux condensés cycloalkyle lié en 5 à 7 ou aryle ;
R⁹, R¹⁰ : alkyle en C₁ à C₈, cycloalkyle lié en position 4- à 7 -, aryle, auquel cas R⁹, R¹⁰ peuvent conjointement avec E former un cycloalkyle ou aryle lié en position 4- à 7-;
R¹¹ : alkyle en C₁ à C₈, aryle, oxyalkyle en C1 à C8, trialkylsiloxy en C₁ à C₈ ;
M : titane, zirconium, hafnium, vanadium, niobium, tantale ;
X : halogène ou alkyle en C₁ à C₈, aryle, benzyle ;
E : carbone, silicium, germanium ou 1,2-éthyle, 1,2-propyle, 1,4-butyle.

12. Procédé selon la revendication 11, **caractérisé en ce que** l'activateur est une chaîne ouverte ou un composé alumoxane cyclique de la Formule générale II ou III 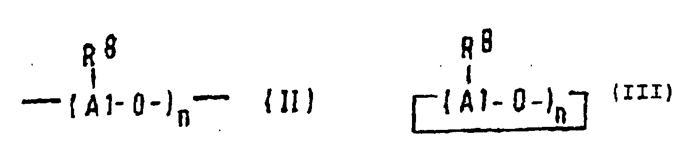 R⁸ représentant un groupe alkyle en C₁ à C₄ et n représentant un nombre entre 5 et 30, et/ou un activateur cationique ou les Formules générales IV à VI.
B (C₆F₅)₃ (IV)
R⁹ ₃C[B(C₆F₅)₄] (V)
[R⁹ ₃N H][B (C₆F₅)₄] (VI)
R⁹ signifiant un groupe alkyle en C₁ à C₄ ou un groupe aryle.

13. Procédé selon la revendication 11 ou 12, **caractérisé en ce que** le complexe de métaux selon la Formule générale I est de préférence un composé de la Formule générale VII, 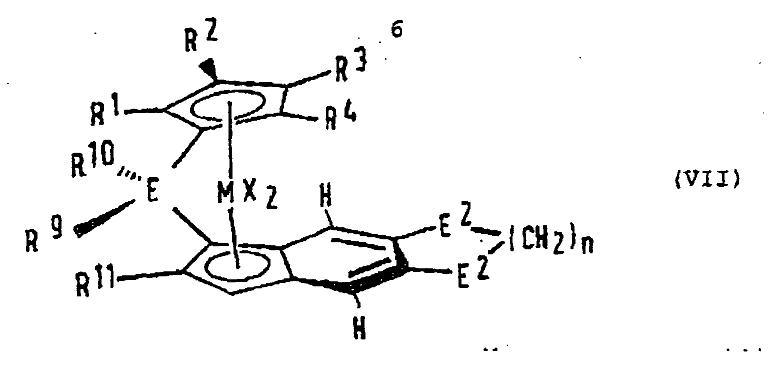 dans laquelle les résidus R¹ à R¹¹ ont les significations indiquées dans la formule générale I et E² = CH₂, O ou S et n = 1 ou 2.

14. Procédé selon au moins l'une des revendications 11 à 13, **caractérisé en ce que** le complexe de métallocènes de la formule générale I et l'activateur selon les formules générales II et VI sont utilisés dans des quantités telles que le rapport atomique entre l'aluminium de l'alumoxane et/ou le bore de l'activateur cationique et le métal de transition du complexe de métallocènes se trouve dans la plage allant de 1/1 à 10⁶/1.
